# EUROPEAN PATENT SPECIFICATION

(11) **EP 4 674 753 B1**
(45) Date of publication and mention of the grant of the patent: **02.12.2026**
(21) Application number: 25187541.5
(22) Date of filing: 04.07.2025
(51) Int. Cl.: B64D 1/06, B64D 7/08, B64D 1/12

(54) **EXTERNAL AIRBORNE LOAD RESTRAINT AND RELEASE MECHANISM WITH MAGNETIC INTERFACE**
EXTERNER LUFTGESTÜTZTER LASTHALTE- UND -FREIGABEMECHANISMUS MIT MAGNETISCHER SCHNITTSTELLE
MÉCANISME EXTERNE DE RETENUE ET DE LIBÉRATION DE CHARGE AÉROPORTÉE À INTERFACE MAGNÉTIQUE

(30) Priority: 05.07.2024 IT 202400015601
(43) Date of publication of application: 07.01.2026
(73) Proprietor: AEREA S.p.A., 22078 Turate (CO) (IT)
(72) Inventor: PERNECHELE, Luca Andrea, 22078 Turate (CO) (IT)
(74) Representative: Buzzi, Notaro & Antonielli d'Oulx S.p.A.

(56) References cited:
- EP-B1- 3 287 368
- KR-A- 20240 032 487
- RU-C1- 2 657 633
- US-A- 2 347 369
- US-B1- 11 505 296

## Description

### Field of the Invention

The present invention relates to an external airborne load restraint and release mechanism, so-called "Release Unit", intended to be mechanically mounted to a generic aircraft. Said mechanism is designed to engage, suspend during transport, and release on command cargo containers, so-called "Stores". The object of Stores is, without limitation, to house various equipment in order to extend the operational capabilities of an aircraft.

### Prior Art

From the state of the art, external airborne load restraint and release mechanisms are known. Generally, the restraint and transport of a Store (load) suspended from a Release Unit (restraint and release mechanism) currently occurs through dedicated metal rings, integral with the Store, into which hooks located in the lower part of the Release Unit engage. Also generally, inside the Release Unit, the hooks are controlled by a mechanism, operable on command, to allow the engagement and release, on ground or in flight, of the Store.

During the motion of an aircraft with an engaged Store, the inertial and aerodynamic stresses acting on the Store are transferred to the Release Unit, which is responsible for absorbing them and retransmitting them in turn to the aircraft structure. In this way, the Store will remain rigidly constrained to the aircraft until its release is commanded. A Release Unit typically comprises a body and at least one pair of contact surfaces (support arms) of the Store protruding from the body. The Store, considered in a simplified manner as a cylindrical body provided with a pair of restraint rings with the respective hooks of the Release Unit, is pressed against the at least one pair of arms in a locked position. The stresses acting on various points of the Store can be reduced and schematized as three forces (Fx, Fy, Fz) applied around an application point, together with three moments referred to the same point and acting along three mutually perpendicular axes (Mx, My, Mz). For analysis convenience, the application point is chosen at the top surface of the Store at the midpoint between the two rings. The contact surfaces (arms) are curved downward to better match the lateral cylindrical surface of the Store. At those points, the inclination of the contact surfaces relative to the horizontal introduces, along with the predominant component of the reaction force along the Z-axis, a minor component along the Y-axis (and possibly also a friction force along the X-axis). For simplification, but without undermining the essence of the analysis described below, it is deliberately chosen here to neglect the contribution of the force component along the Y-axis (considering, in practice, as if the contact surfaces were not curved but flat, and lying parallel to the horizontal X-Y plane, with no reaction to forces acting in the plane itself). In this simplified schematization, the mutual influence of the various forces and moments along the axes is thus decoupled, to make the explanation easier.

Net of the applied simplification, it is analyzed below how each single component of force and moment acting on the load is reduced and referred to the chosen application point, and then reacted by the various components of the Release Unit.
- Fx: the force introduced by the load is reacted by the contact between the front surface of the ring and a dedicated abutment in the hook seat (one for each seat of the two hooks, to withstand the load in both directions);
- Fy: the force introduced by the load is reacted by the contact between the lateral surface of the two rings and two dedicated abutments in the hook seat (for both sides, to withstand the load in both directions);
- Fz: the force introduced by the load directed toward z- (downward) is reacted by the hooks themselves engaging with the ring eyelet; the force introduced by the load directed toward z+ (upward) is reacted by dedicated shaped contact surfaces pressing against the corresponding area of the Store;
- Mx: the moment introduced by the load is reacted by a pair of forces acting one in the z+ direction on the hooks, the other in the z- direction on the contact surfaces;
- My: the moment introduced by the load is reacted by a pair of forces acting one in the z+ direction on one of the two hooks, the other in the z-direction on the contact surfaces;
- Mz: the moment introduced by the load is reacted by a pair of resulting forces from the contact between the lateral surface of the two rings and the dedicated abutments in the hook seat.

The technique described here is consolidated and extremely general in use. Nevertheless, this solution inherently involves some practically unavoidable issues briefly analyzed below.
1) The presence of moving mechanical parts introduces various criticalities regarding the overall robustness of the system, the need for continuous cleaning activity, and the periodic verification of the functionality of the mechanism itself.
2) The loads to which the mechanical parts are subjected are very significant, and this increases the complexity of the mechanism due to the reduced space available for the movement of each component.
3) The need to provide the system with adequate safety and redundancy functionalities makes the mechanism delicate, complex to build, and laborious to maintain or repair.
4) To ensure the free movement of the hooks relative to the rings during some phases of the Store engagement procedure, it is necessary to provide mutual clearance between the parts, which, however, is important to eliminate during other phases of transport, as it can cause harmful vibrations. The mechanism must therefore be equipped with an additional function to recover mutual clearances to achieve a solid clamping. This further complicates the system, exacerbating the criticalities described above.
5) Generally, the activation of the Store release system can occur either through a manual command provided with the mechanism or through a remote command available to the pilot. Remote actuation of the system is achieved by installing an additional function in the mechanism, actuated by pyrotechnic, pneumatic, mechanical (loaded springs), or electrical energy. Due to the high energies involved, specific issues of stress resistance, safety, and injury prevention arise and must be duly considered, further complicating the overall mechanism.
6) In the case of high-performance aircraft, the aerodynamic flow around the aircraft is, on many occasions, such as to disturb or hinder the free fall of the Store once released. It is therefore necessary to provide an additional specific mechanism, generally powered by the same energy sources listed above, to push and properly distance the Store from the aircraft during the in-flight release phase. This function also introduces further complexities into the system, in addition to requiring specific maintenance activities.

From patent applications EP0955236 A1, US4148451 A1, and GB2071286 A, external airborne load restraint and release mechanisms are known, comprising one or more hooks arranged to couple with loads provided with dedicated suspension rings. Said hooks are rotatable around respective pins between an open position and a retaining position of the suspension ring of the respective load to be restrained.

Such restraint and release mechanisms are all subject to the drawbacks discussed previously, moreover, said restraint and release mechanisms must be equipped with hook movement mechanisms that can ensure their closure and opening on command for every possible operational condition of the aircraft, making their realization complex, bulky, and costly.

There is therefore a need for an external airborne load restraint and release mechanism capable of withstanding the forces and moments generated by the load described above but not affected by the typical drawbacks arising from the use of restraint hooks and related moving mechanical parts.

US 11505296 B1 describes a device and method for transporting and releasing a load attached to an unmanned aircraft via a magnetic field generated by a permanent magnet fixed to the device and a permanent magnet fixed to the load. The load release occurs by rotating one of the two magnets, thereby canceling the resultant magnetic field generated by both magnets and generating a repulsive force that moves the load away. The device may include guide pins suitable for facilitating alignment between the parts during engagement, performing an exclusive centering function during load positioning, as it is not designed to withstand lateral loads. KR 20240032487 A relates to a launch device comprising a single electromagnet configured to magnetically restrain a rocket, and a control device for de-energizing the electromagnet to release the rocket. US2347369 describes a pair of aligned electromagnets powered by a single circuit, magnetically coupled to armatures fixed to an airborne load. The electromagnets, powered by the single electrical circuit, can be deenergized to release the bomb. EP3287368 relates to a restraint mechanism comprising legs that include end feet for stabilizing a load attached to a suspension hook provided within the mechanism.

None of the prior art documents effectively addresses the criticalities related to load stabilization and safety, particularly concerning the possibility of having multiple independent and redundant magnetic restraint points. The use, for example, of a pair of electromagnets powered by a single circuit, as described in US2347369, has intrinsic reliability limitations, as it does not allow for balanced distribution of restraint forces nor isolation of localized faults. Specifically, the prior art lacks a magnetic restraint system that enables secure and stable load anchoring even in the presence of local disturbances or variations in magnetic intensity. Moreover, the prior art regarding magnetic restraint devices for transported loads does not contemplate the integration of passive mechanical abutment elements, configured to cooperate with the magnetic restraint to actively limit load movements along directions orthogonal to the magnetic attraction force.

### Summary of the Invention

To achieve this object, the invention relates to a restraint and release mechanism and an external airborne load as defined in claim 1.

Thanks to this solution concept, it is possible to offer the same functionalities already present in current hook-and-ring Release Units while overcoming most of the technical issues highlighted above. The use of magnetism allows for the complete elimination of moving mechanical parts, and thus the inherent criticalities described in points 1 to 5. Regarding the function described in point 6, the magnetic effect can also be suitably exploited for Store release instead of traditional systems. Furthermore, the configuration with multiple independent magnetic anchoring points allows for more uniform distribution of restraint forces, improving load stability even in the presence of local disturbances or partial variations in the magnetic field. This solution increases operational reliability and introduces intrinsic functional redundancy that ensures continuity of restraint even in the presence of anomalies or localized performance drops in one or more magnetic devices. This solution concept contributes to a significant increase in fault tolerance and a consequent rise in operational safety levels, reducing the risk of unintentional load detachment even under critical dynamic, environmental, or electromagnetic conditions. Moreover, the at least one pin-and-abutment seat abutment device, structured to further restrain the load along directions tangential to the body, effectively cancels transverse displacements of the load relative to the main magnetic restraint, improving stability under vibration, impact, or lateral acceleration conditions.

In one embodiment of the invention, the load comprises at least one abutment seat, and the restraint and release mechanism comprises at least one pin adapted to couple with the abutment seat in the load's locked position. Alternatively, the load restraint and release mechanism comprises at least one abutment seat, and the load comprises at least one pin adapted to couple with the abutment seat in the load's locked position.

In one embodiment of the invention, the at least one pin and at least one abutment seat extend along a plane transverse to the mechanism's body. Embodiments of the invention may include two or more pin-and-abutment seat abutment devices.

In one embodiment of the invention, the restraint and release mechanism comprises a device that generates a magnetic effect, and the load comprises at least one contact plate made of a material sensitive to the magnetic effect, or vice versa.

In other possible embodiments of the invention, the device that generates a magnetic effect comprises at least one of: a permanent magnet, a semi-permanent magnet comprising a material with magnetization characteristics variable via application of an electrical pulse, and/or an electromagnet.

In one embodiment of the invention, the restraint and release mechanism comprises at least one load release device comprising at least one of: an electromagnet that, when powered, generates an opposing magnetic effect of sufficient intensity to sufficiently weaken or even temporarily cancel that generated by the device that generates a magnetic effect, and/or a device that applies an electrical pulse that, when activated, varies the magnetization characteristics of the semi-permanent magnet device to reduce, cancel, or invert the restraint magnetic field, releasing the load.

In a further embodiment of the invention, the at least one pin comprises a load push-and-eject mechanism that includes at least one axially sliding body actuated by a mechanical or electromagnetic actuator, the actuator may be a linear motor or a Gauss gun or cannon.

### Brief Description of the Drawings

The invention will now be described in detail with reference to the accompanying drawings, provided by way of non-limiting example, in which:
- Figure 1 is a schematic perspective view of an embodiment of the restraint and release mechanism and an embodiment of the load according to the invention in a decoupled position of the load,
- Figure 2 is a schematic perspective view of an embodiment of the restraint and release mechanism according to the invention,
- Figure 3 is a bottom view of Figure 2,
- Figure 4 is a schematic perspective view of an embodiment of the load according to the invention,
- Figure 5 is a view similar to Figure 1 in which the load is shown in a locked position,
- Figure 6 is a schematic bottom perspective view of a further embodiment of the restraint and release mechanism comprising a push mechanism according to the invention, and
- Figure 7 is a schematic perspective view of a further embodiment of the restraint and release mechanism comprising a push mechanism according to the invention, shown during the load release phase.

### Detailed Description of the Invention

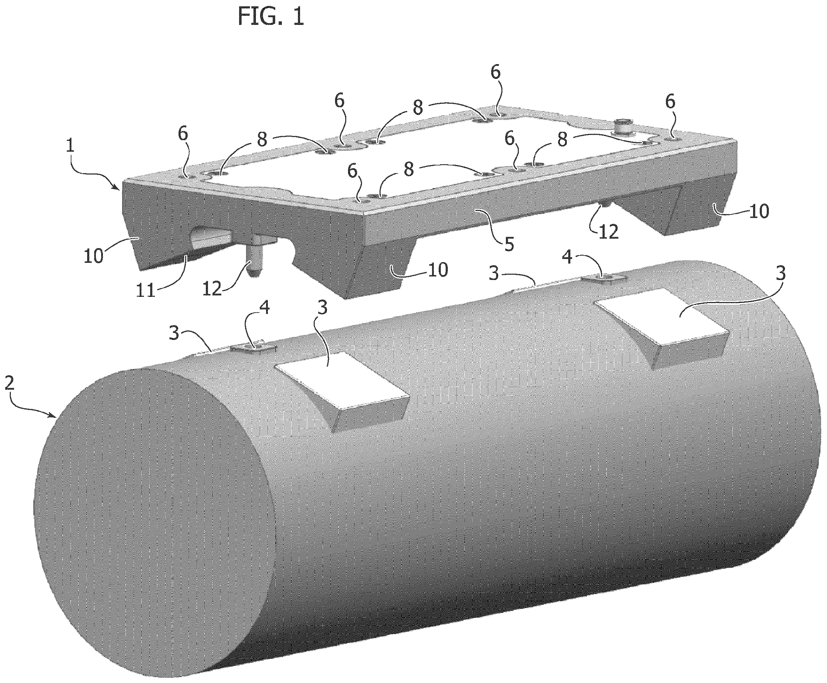

Referring initially to Figure 1, a restraint and release mechanism 1, so-called Release Unit, and an external airborne load 2, so-called Store, according to the invention are illustrated.

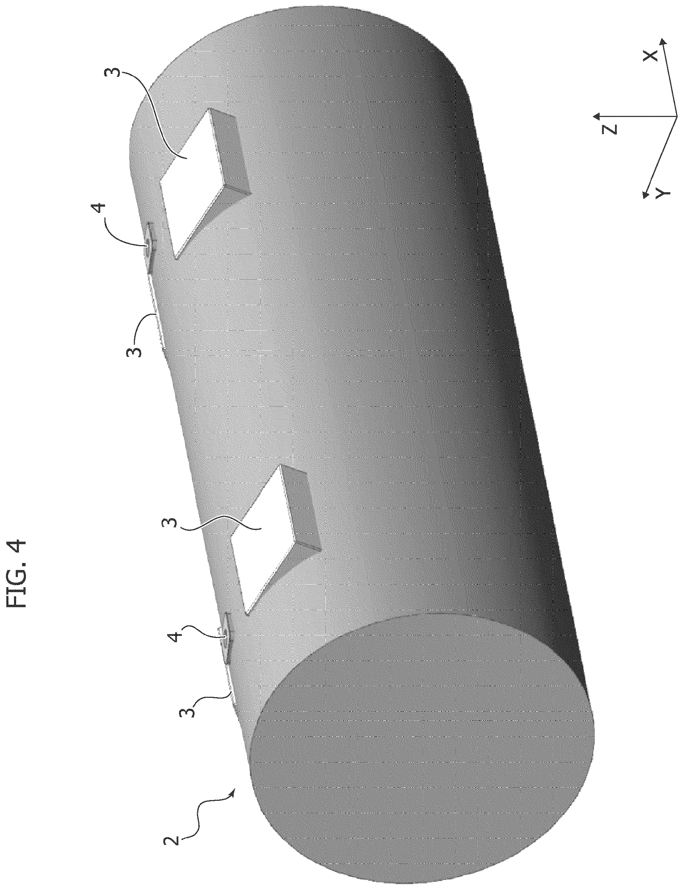

With reference to Figure 4, the load 2, typically but not exclusively, comprises a cylindrical shell provided with two pairs of contact plates 3 made of a material sensitive to the magnetic effect, generally ferromagnetic, symmetrically arranged on an upper portion of the load 2. It is evident that the load 2 may assume different configurations and shapes depending on specific uses. The load 2 further comprises a pair of abutment seats 4, in the illustrated example consisting of two cylindrical cavities, each disposed between a pair of the contact plates 3, along the upper generatrix of the cylinder.

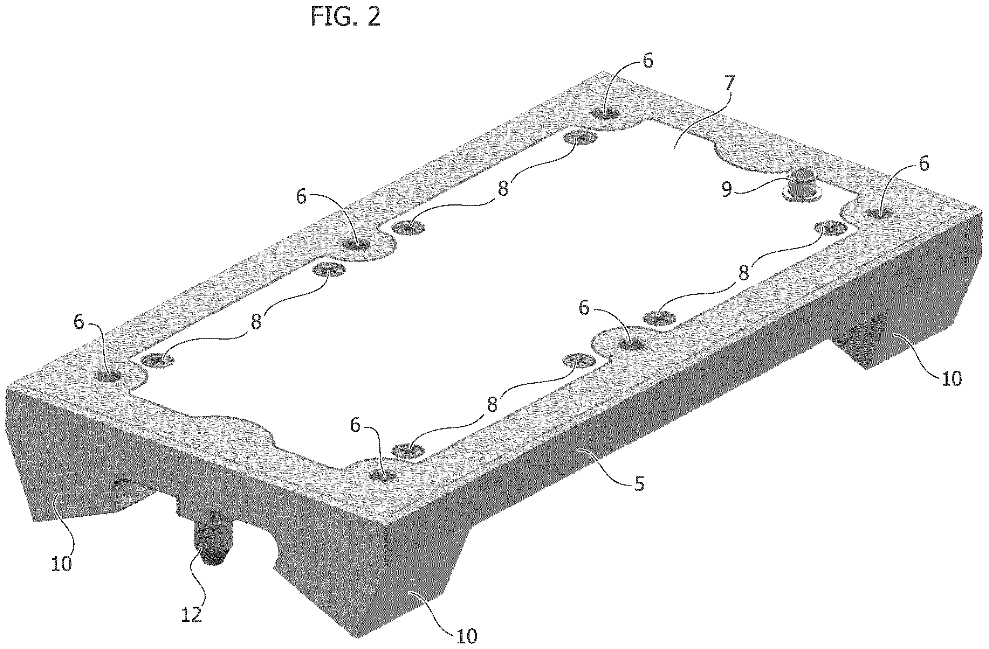

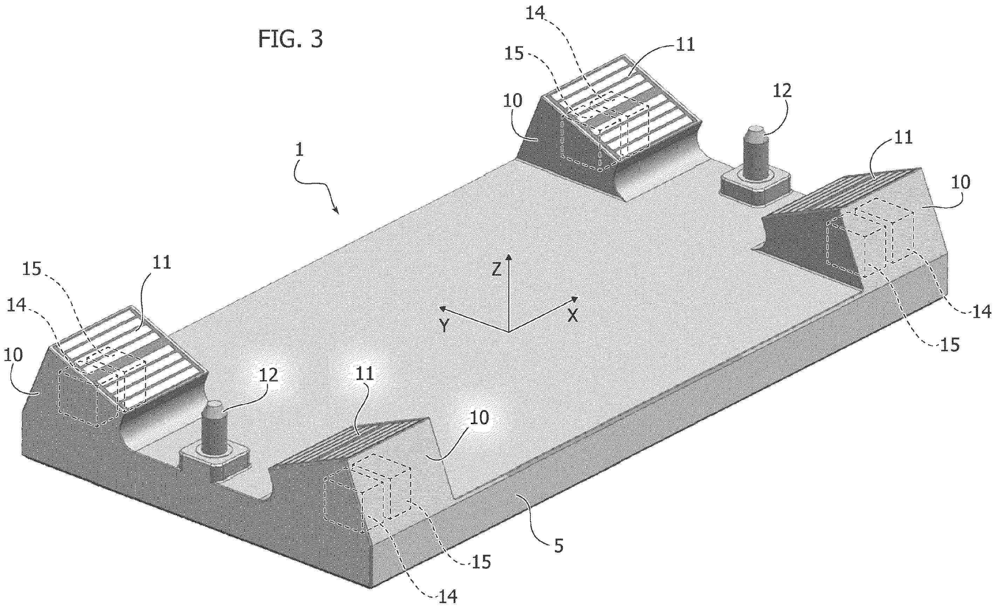

With particular reference to Figures 2 and 3, the restraint and release mechanism 1 comprises a body 5, generally but not exclusively of flattened box-like shape, hermetically sealed by an upper cover 7 via a plurality of fastening elements 8, and internally including magnetic devices and control circuitry, not shown, which will be discussed. A fastening system, shown in the drawings by way of non-exclusive example as a plurality of threaded holes 6, enables rigid coupling between the restraint and release mechanism 1 and a load-bearing structure of a generic aircraft, not shown. A cable pass-through 9 is provided on the cover 7 for the passage of electrical power supplies and actuation commands for the restraint and release mechanism 1 from the aircraft. The restraint and release mechanism 1 further comprises four arms 10 protruding from the lower ends of the body 5, each having a contact surface 11 suitably shaped to engage with a respective plate 3 integral with the load 2.

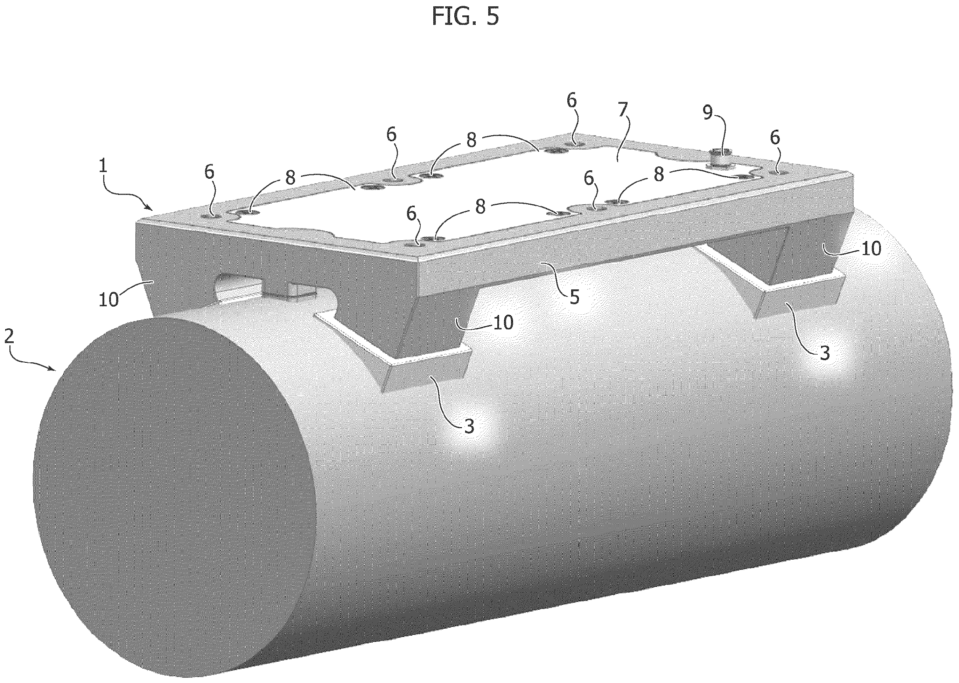

According to the invention, the load 2 is restrained to the restraint and release mechanism 1 in a locked position, visible in Figure 5, by means of at least one device 14 that generates a magnetic effect, visible in Figure 3, such as a permanent magnet, semi-permanent magnet or electromagnet, which acts on the plates 3 of the load 2. In the embodiment of the invention shown in the figures, said at least one device 14 comprises four devices 14 that create respective magnetic fields on the contact surfaces 11 of the four protruding arms 10.

The restraint and release mechanism 1 according to the invention therefore comprises at least one device 14 that generates a magnetic effect including at least one of the following:
- a permanent magnet,
- an electromagnet,
- a semi-permanent magnet comprising a material having magnetization characteristics variable through application of an electrical pulse.

Although the resulting attraction effect is similar, each solution has different peculiar characteristics briefly summarized below.
1) Permanent magnet: the magnet exerts its attraction force indefinitely. To release the load 2 on command, the magnet must be equipped with a winding around it (i.e., an electromagnet) which, when properly powered (with the correct polarity), generates an opposing field that sufficiently weakens or even temporarily cancels the field of the permanent magnet. The drawback is that the system is always in attraction, except during the moments when the coil is powered; it is not possible to permanently change the attraction state.
2) Electromagnet: the system exerts its attraction force only while being powered. The problem with this solution is the continuous energy consumption and the need to never interrupt the power supply except during release moments.
3) Semi-permanent magnet: The magnetic assembly consists of 3 parts:
   . a hollow cylindrical magnet, made of a magnetic material with high coercivity (for which a very strong magnetic field is required to modify its magnetization state);
   . a cylindrical magnet positioned to fill the void of the previous magnet, made of a magnetic material with low coercivity (for which a weaker magnetic field is sufficient to reverse its magnetization state);
   . a coil capable of generating an electromagnetic field, wound around the inner cylinder. The coil is usually not powered.

When the polarity of the two magnets is aligned, the magnetic field of the assembly develops outward. Through a brief pulse to the coil, the cylindrical magnet can be forced to reverse its polarity (while the generated field is insufficient to influence the outer magnet). In this way, the polarity of the two magnets becomes opposed, the magnetic circuit closes on itself, and the assembly practically develops no external force. An electrical pulse of opposite direction changes the state of the cylindrical magnet again and thus the state of the entire system. The advantage is that a short-duration current pulse (less than 1 sec.) is required to change state, and the system can subsequently maintain the set state indefinitely without any energy expenditure. The semi-permanent magnet device 14 is the system provided in the preferred embodiment of the mechanism according to the invention.

Referring again to Figure 4, the plates 3, integral with the load 2, provide restraint reactions corresponding to those provided in a traditional Release Unit, with the addition that they can react not only in support (forces in the z- direction, i.e., downward) but, thanks to the magnetic effect, also in attraction. In this way, the resulting sum of the four forces for each of the plates 3 will correspond to the force in the z+ direction, upward, obtained from the support of the hooks of traditional Release Units. It should be noted that the plates 3 described here have flat contact faces, as it is assumed that the achievable mechanical precision is better than with curved surfaces (it should be remembered that good quality magnetic attraction requires the contact between surfaces to be as precise as possible), although the solution with simply or doubly curved contact surfaces 11 is conceptually entirely analogous and therefore also falls within the scope of the present invention.

In the embodiment shown in the figures, preference has been given to the solution where the device 14 that generates the magnetic effect is installed inside the body of the restraint and release mechanism 1, while the contact plates 3 are integral with the load 2. This is because the load 2, in some operational missions, is expendable, and thus the impact, including economic, of the plates 3 remains negligible. Conversely, the device 14 may be of sophisticated and costly technology, and thus it is preferred not to foresee its loss with the mission execution.

However, it is clear that the opposite solution should not be ruled out a priori, i.e., where the plates 3 are provided on the restraint and release mechanism 1 and the device 14 that generates the magnetic effect is installed on the load 2; this solution is conceptually analogous to the preferred one described above and therefore falls within the scope of the present invention.

During the aircraft's motion within its flight envelope, the mass of the load 2 generates inertial and aerodynamic stresses that must be appropriately countered by rigidly and securely restraining the load 2 to the restraint and release mechanism 1 and, thus, to the aircraft, to prevent any unwanted movement or vibration.

The plates 3 alone, however, under some aircraft operating conditions, may not be able to provide all the necessary restraint reactions, particularly those in reaction to forces lying in the X-Y plane and the moment Mz (which decomposes into forces acting in the same X-Y plane). It should be noted that, in addition to the simplification regarding the contact angle adopted above, conservatively, the friction forces possibly generated by the contact between the plates 3 and the magnetic devices are considered negligible.

Therefore, conveniently according to another aspect of the invention, to react to the forces in the X-Y plane, the restraint and release mechanism 1 further comprises two calibrated pins 12, arranged and positioned to precisely interface with the corresponding abutment seats 4 of the load 2. The device with calibrated pins 12 and abutment seats 4 ensures the transfer of forces acting in the X-Y plane between the load 2 and the restraint and release mechanism 1.

The following is the force and moment transfer scheme for the restraint and release mechanism 1 according to the invention.
- Fx: the force introduced by the load 2 is reacted by the contact between the two calibrated pins 12 and the abutment seats 4;
- Fy: the force introduced by the load 2 is reacted by the contact between the two calibrated pins 12 and the abutment seats 4;
- Fz: the force introduced by the load 2 directed toward z- (downward) is reacted by the attractive magnetic force that develops between the contact surfaces 11 and the plates 3; the force introduced by the load 2 directed toward z+ (upward) is reacted in compression by the same surfaces;
- Mx: the moment introduced by the load 2 is reacted by a pair of forces acting one in the z+ direction on the plates, the other in the z-direction in support on the plates 3, or alternatively vice versa, depending on the direction of the moment Mx;
- My: the moment introduced by the load 2 is reacted by a pair of forces acting one in the z+ direction on the plates 3, the other in the z-direction in support on the plates 3, or alternatively vice versa, depending on the direction of the moment My;
- Mz: the moment introduced by the load 2 is reacted by a pair of resulting forces from the contact between the two calibrated pins 12 and the abutment seats 4.

It is therefore evident how the solution according to the invention described here allows obtaining the same restraint reactions necessary for the engagement and transport of the load 2, similarly to what occurs with traditional Release Units.

The restraint and release mechanism 1 according to the invention may further comprise at least one release device 15 of the load 2.

The commanded release of the load 2 can occur by acting on the magnetic force. This can be done in different ways, depending also on the specific technical solution adopted for generating the magnetic effect.

As previously mentioned, when using a permanent magnet as the magnetic restraint device 14, it can be temporarily deactivated (achieving the release of the load 2) by means of a release device 15 of the electromagnet type which, when properly powered, can generate an opposing field of sufficient intensity to sufficiently weaken or even temporarily cancel the field of the permanent magnet device 14.

When using a semi-permanent magnet device 14 as a restraint, it is possible to vary its generated field through the application of an electrical pulse by means of a suitable release device 15, which modifies the magnetization characteristics of the material to release the load 2.

In the case where an electromagnet device 14 is used as a restraint, the magnetic field generated by it persists as long as the electromagnet is powered; therefore, the release device 15 is not necessary, and release can be achieved simply by temporarily interrupting the power supply.

It is highlighted that the described invention, while it may indifferently utilize one, the other, or any combination of the methodologies described here for generating the magnetic field, does not require any moving parts. It is thus possible to completely eliminate the drawbacks inherent in the hook-and-ring restraint and release mechanisms of the prior art.

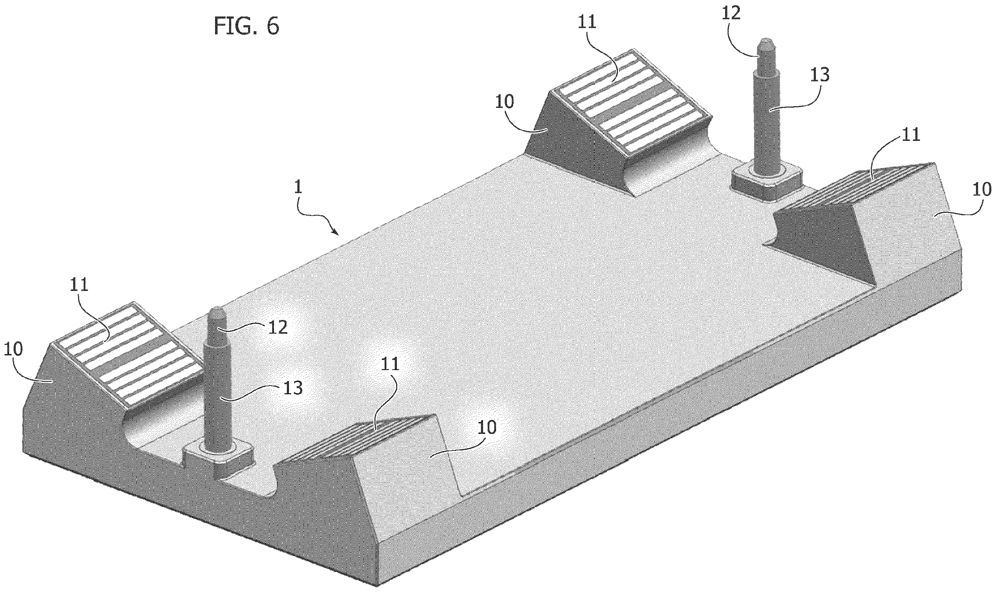

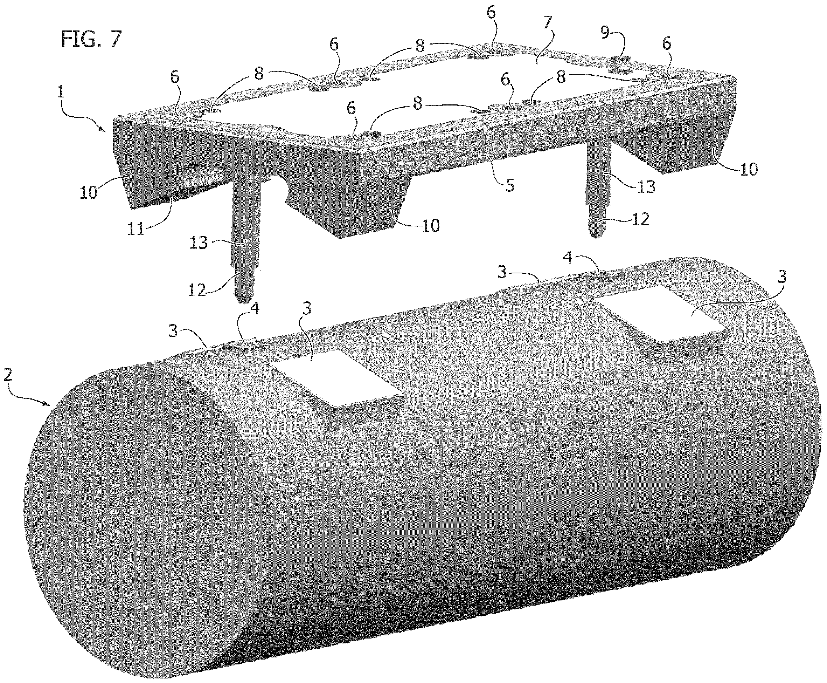

In the embodiment of the invention shown in Figures 6 and 7, the restraint and release mechanism 1 comprises a push-and-eject mechanism for the load 2 which, in some embodiments, can also be actuated using the effects of forces generated by magnetic fields.

In the solution shown in the figures, each of the pins 12 of the restraint and release mechanism 1 comprises a body 13 axially slidable on command by means of a suitable actuator. In this way, the pins 12 have the additional function of acting as push elements, to push and distance the load 2 with the force necessary for its release and distancing. The actuator for each of the pins may advantageously (though not necessarily exclusively) also exploit magnetic forces (linear motor, coil gun, or similar solutions), so as to be controlled and coordinated via the same control electronics arranged inside the mechanism body and used to command some of the devices that generate a magnetic field to restrain the load 2.

Naturally, the construction details and embodiments may vary widely from what has been described and illustrated, without thereby departing from the scope of the present invention as defined in the claims that follow.

## Claims

1. Restraint and release mechanism (1) and external airborne load (2),
said restraint and release mechanism (1) being configured to restrain in a locked position and release on command said external airborne load (2),
said restraint and release mechanism (1) comprising a body (5) that includes at least one contact surface (11) for the load (2), said load (2) being pressed against said at least one contact surface (11) in said locked position,
said load (2) being restrained to the restraint and release mechanism (1) in said locked position by means of a magnetic field, wherein
at least one pin (12) and at least one abutment seat (4) are provided to further restrain said load (2) along the X,Y directions lying in the main plane of said body (5) and **characterised in that** said at least one contact surface (11) comprises four contact surfaces (11) protruding from said body (5), each contact surface (11) being capable of generating a respective magnetic field by means of a device (14) that generates a magnetic effect.

2. Mechanism (1) and load (2) according to claim 1, **characterized in that** said load (2) comprises said at least one abutment seat (4), and **in that** said restraint and release mechanism (1) comprises said at least one pin (12) adapted to couple with said at least one abutment seat (4) in the locked position of the load (2), or vice versa.

3. Mechanism (1) and load (2) according to claim 1 or 2, **characterized in that** said at least one pin (12) and said at least one abutment seat (4) extend along a plane transverse to the main plane of said body (5).

4. Mechanism (1) and load (2) according to any of the preceding claims, **characterized in that** said restraint and release mechanism (1) comprises at least one device (14) that generates a magnetic effect and said load (2) comprises at least one contact plate (3) made of a material sensitive to the magnetic effect.

5. Mechanism (1) and load (2) according to any of claims 1 to 3, **characterized in that** said load (2) comprises at least one device (14) that generates a magnetic effect and said restraint and release mechanism (1) comprises at least one contact plate (3) made of a material sensitive to the magnetic effect.

6. Mechanism (1) and load (2) according to any of the preceding claims, **characterized in that** said device (14) that generates a magnetic effect comprises at least one of the following:
- a device (14) that includes a permanent magnet,
- a device (14) that includes a semi-permanent magnet comprising a material having magnetization characteristics variable through application of an electrical pulse,
- a device (14) that includes an electromagnet.

7. Mechanism (1) and load (2) according to any of the preceding claims, **characterized in that** it comprises at least one release device (15) of the load (2) that comprises one of the following:
- a device (15) comprising an electromagnet which, when energized, produces a magnetic field of opposite polarity and sufficient intensity to reduce or counteract the magnetic effect generated by said device (14),
- a device (15) that applies an electrical pulse that, when activated, varies the magnetization characteristics of the device (14) that includes a semi-permanent magnet.

8. Mechanism (1) and load (2) according to any of the preceding claims, **characterized in that** said at least one pin (12) comprises a push-and-eject mechanism for the load (2) that includes at least one body (13) axially slidable actuated by a mechanical or electromagnetic actuator.

9. Mechanism (1) and load (2) according to claim 8 **characterized in that** said actuator is a linear motor or a Gauss gun.

## Patentansprüche

1. Rückhalte- und Freigabemechanismus (1) und externe luftgetragene Last (2), wobei der Halte- und Freigabemechanismus (1) dazu ausgelegt ist, in einer verriegelten Position zurückzuhalten und auf Befehl die externe luftgetragene Last (2) freizugeben, wobei der Rückhalte- und Freigabemechanismus (1) einen Körper (5) umfasst, der mindestens eine Kontaktfläche (11) für die Last (2) beinhaltet, wobei die Last (2) in der verriegelten Kontaktposition gegen die mindestens eine Kontaktfläche (11) gedrückt wird,
wobei die Last (2) in der verriegelten Position mittels eines Magnetfeldes an dem Rückhalte- und Freigabemechanismus (1) zurückgehalten wird, wobei mindestens ein Stift (12) und mindestens ein Anschlagsitz (4) vorgesehen sind, um die Last (2) entlang der in der Hauptebene des Körpers (5) liegenden X-, Y-Richtungen weiter zurückzuhalten, und **dadurch gekennzeichnet, dass** die mindestens eine Kontaktfläche (11) vier Kontaktflächen (11) umfasst, die von dem Körper (5) vorspringen, wobei jede Kontaktfläche (11) in der Lage ist, ein jeweiliges Magnetfeld mittels einer Vorrichtung (14) zu erzeugen, die einen magnetischen Effekt erzeugt.

2. Mechanismus (1) und Last (2) nach Anspruch 1, **dadurch gekennzeichnet, dass** die Last (2) den mindestens einen Anschlagsitz (4) umfasst und dass der Rückhalte- und Freigabemechanismus (1) den mindestens einen Stift (12) umfasst, der dazu angepasst ist, in der verriegelten Position der Last (2) mit dem mindestens einen Anschlagsitz (4) zu koppeln, oder umgekehrt.

3. Mechanismus (1) und Last (2) nach Anspruch 1 oder 2, **dadurch gekennzeichnet, dass** sich der mindestens eine Stift (12) und der mindestens eine Anschlagsitz (4) entlang einer Ebene quer zur Hauptebene des Körpers (5) erstrecken.

4. Mechanismus (1) und Last (2) nach einem der vorhergehenden Ansprüche, **dadurch gekennzeichnet, dass** der Rückhalte- und Freigabemechanismus (1) mindestens eine Vorrichtung (14) umfasst, die einen magnetischen Effekt erzeugt, und die Last (2) mindestens eine Kontaktplatte (3) umfasst, die aus einem Material hergestellt ist, das für den magnetischen Effekt empfindlich ist.

5. Mechanismus (1) und Last (2) nach einem der Ansprüche 1 bis 3, **dadurch gekennzeichnet, dass** die Last (2) mindestens eine Vorrichtung (14) umfasst, die einen magnetischen Effekt erzeugt, und dass der Rückhalte- und Freigabemechanismus (1) mindestens eine Kontaktplatte (3) umfasst, die aus einem Material hergestellt ist, das für den magnetischen Effekt empfindlich ist.

6. Mechanismus (1) und Last (2) nach einem der vorhergehenden Ansprüche, **dadurch gekennzeichnet, dass** die Vorrichtung (14), die einen magnetischen Effekt erzeugt, mindestens eine der Folgenden umfasst:
- eine Vorrichtung (14), die einen Permanentmagneten beinhaltet,
- eine Vorrichtung (14), die einen Semipermanentmagneten beinhaltet, der ein Material mit Magnetisierungscharakteristiken umfasst, die durch Anlegen eines elektrischen Impulses variabel sind,
- eine Vorrichtung (14), die einen Elektromagneten beinhaltet.

7. Mechanismus (1) und Last (2) nach einem der vorhergehenden Ansprüche, **dadurch gekennzeichnet, dass** sie mindestens eine Freigabevorrichtung (15) der Last (2) umfasst, die eine der Folgenden umfasst:
- eine Vorrichtung (15), die einen Elektromagneten umfasst, der, wenn er erregt wird, ein Magnetfeld mit entgegengesetzter Polarität und ausreichender Intensität erzeugt, um die von der Vorrichtung (14) erzeugte magnetische Wirkung zu reduzieren oder ihr entgegenzuwirken,
- eine Vorrichtung (15), die einen elektrischen Impuls anlegt, der, wenn er aktiviert wird, die Magnetisierungscharakteristiken der Vorrichtung (14) variiert, die einen Semipermanentmagneten enthält.

8. Mechanismus (1) und Last (2) nach einem der vorhergehenden Ansprüche, **dadurch gekennzeichnet, dass** der mindestens eine Stift (12) einen Drück- und Auswurfmechanismus für die Last (2) umfasst, der mindestens einen axial verschiebbaren Körper (13) umfasst, der durch einen mechanischen oder elektromagnetischen Aktuator betätigt wird.

9. Mechanismus (1) und Last (2) nach Anspruch 8, **dadurch gekennzeichnet, dass** der Aktuator ein Linearmotor oder eine Gaußgewehr ist.

## Revendications

1. Mécanisme (1) de retenue et de libération et charge aéroportée externe (2), ledit mécanisme (1) de retenue et de libération étant conçu pour retenir dans une position verrouillée et libérer sur commande ladite charge aéroportée externe (2), ledit mécanisme (1) de retenue et de libération comprenant un corps (5) qui comporte au moins une surface de contact (11) pour la charge (2), ladite charge (2) étant pressée contre ladite au moins une surface de contact (11) dans ladite position verrouillée,
ladite charge (2) étant retenue sur le mécanisme (1) de retenue et de libération dans ladite position verrouillée au moyen d'un champ magnétique, au moins une broche (12) et au moins un siège de butée (4) étant fournis pour retenir davantage ladite charge (2) dans les directions X, Y situées dans le plan principal dudit corps (5) et **caractérisée en ce que** ladite au moins une surface de contact (11) comprend quatre surfaces de contact (11) faisant saillie dudit corps (5), chaque surface de contact (11) pouvant générer un champ magnétique respectif au moyen d'un dispositif (14) qui génère un effet magnétique.

2. Mécanisme (1) et charge (2) selon la revendication 1, **caractérisés en ce que** ladite charge (2) comprend ledit au moins un siège de butée (4), et **en ce que** ledit mécanisme (1) de retenue et de libération comprend ladite au moins une broche (12) conçue pour s'accoupler avec ledit au moins un siège de butée (4) dans la position verrouillée de la charge (2), ou vice versa.

3. Mécanisme (1) et charge (2) selon la revendication 1 ou 2, **caractérisés en ce que** ladite au moins une broche (12) et ledit au moins un siège de butée (4) s'étendent le long d'un plan transversal au plan principal dudit corps (5).

4. Mécanisme (1) et charge (2) selon l'une quelconque des revendications précédentes, **caractérisés en ce que** ledit mécanisme (1) de retenue et de libération comprend au moins un dispositif (14) qui génère un effet magnétique et ladite charge (2) comprend au moins une plaque de contact (3) en un matériau sensible à l'effet magnétique.

5. Mécanisme (1) et charge (2) selon l'une quelconque des revendications 1 à 3, **caractérisés en ce que** ladite charge (2) comprend au moins un dispositif (14) qui génère un effet magnétique et ledit mécanisme (1) de retenue et de libération comprend au moins une plaque de contact (3) en un matériau sensible à l'effet magnétique.

6. Mécanisme (1) et charge (2) selon l'une quelconque des revendications précédentes, **caractérisés en ce que** ledit dispositif (14) qui génère un effet magnétique comprend au moins l'un parmi :
- un dispositif (14) qui comprend un aimant permanent,
- un dispositif (14) qui comprend un aimant semi-permanent comportant un matériau présentant des caractéristiques de magnétisation variables par application d'une impulsion électrique,
- un dispositif (14) qui comprend un électroaimant.

7. Mécanisme (1) et charge (2) selon l'une quelconque des revendications précédentes, **caractérisés en ce qu'**ils comportent au moins un dispositif de libération (15) de la charge (2) qui comprend l'un parmi :
- un dispositif (15) comprenant un électroaimant qui, lorsqu'il est parcouru par le courant, produit un champ magnétique de polarité opposée et d'intensité suffisante pour réduire ou contrecarrer l'effet magnétique généré par ledit dispositif (14),
- un dispositif (15) qui applique une impulsion électrique qui, lorsqu'il est activé, fait varier les caractéristiques de magnétisation du dispositif (14) qui comporte un aimant semi-permanent.

8. Mécanisme (1) et charge (2) selon l'une quelconque des revendications précédentes, **caractérisés en ce que** ladite au moins une broche (12) comprend un mécanisme de poussée et d'éjection pour la charge (2) qui comprend au moins un corps (13) pouvant coulisser axialement par un actionneur mécanique ou électromagnétique.

9. Mécanisme (1) et charge (2) selon la revendication 8, **caractérisés en ce que** ledit actionneur est un moteur linéaire ou un canon de Gauss.
